# EUROPÄISCHE PATENTANMELDUNG

(11) **EP 3 993 211 A1**
(43) Veröffentlichungstag der Anmeldung: **04.05.2022**
(21) Anmeldenummer: 21196817.7
(22) Anmeldetag: 15.09.2021
(51) Int. Cl.: H02J 3/14, H02J 3/48, H02J 13/00

(54) **VERFAHREN, VORRICHTUNGEN UND KOMMUNIKATIONSNETZE ZUM STEUERN EINER DEZENTRALEN EINHEIT IN EINEM ELEKTRISCHEN VERSORGUNGSNETZ**

(30) Priorität: 29.10.2020 DE 102020128509
(71) Anmelder: E.On Group Innovation GmbH, 45131 Essen (DE)
(72) Erfinder: Berazaluce Minondo, Inigo, 45470 Mühlheim an der Ruhr (DE); Davies, Robert, Putney London, SW15 1AH (GB); Fischer, Thomas, 45149 Essen (DE); Hernandez Salmeron, Luis Arturo, 40237 Düsseldorf (DE); Rosvall, Jörgen, 23535 Vellinge (SE); Rumney, Denver, Galashiels, TD1 2BL (GB)
(74) Vertreter: Gunzelmann, Rainer

(57) **Zusammenfassung**

Es werden Verfahren zum Steuern einer dezentralen Einheit (10) in einem elektrischen Versorgungsnetz (60) beschrieben, die von einer dezentralen Einheit (1), einer Zentraleinheit (20) und/oder einem Server (30) ausgeführt werden. Ferner werden eine dezentrale Einheit (10), eine Zentraleinheit (20), ein Server (30) und ein Kommunikationsnetz (40, 50) beschrieben. Das Kommunikationsnetz (40, 50) umfasst eine erste Kommunikationsverbindung (40) und eine zweite Kommunikationsverbindung (50) umfasst, die voneinander verschieden sind.

## Beschreibung

### TECHNISCHES GEBIET

Die vorliegende Offenbarung betrifft Techniken zum Steuern einer dezentralen Einheit in einem elektrischen Versorgungsnetz. Insbesondere betrifft die vorliegenden Offenbarung Verfahren zum Steuern einer dezentralen Einheit in einem elektrischen Versorgungsnetz, die von einer dezentralen Einheit, einer Zentraleinheit und/oder einem Server ausgeführt werden. Ferner betrifft die vorliegende Offenbarung eine dezentrale Einheit, eine Zentraleinheit, einen Server und ein Kommunikationsnetz, die dazu eingerichtet sind, eine dezentrale Einheit zu steuern bzw. eine Steuerung einer dezentralen Einheit zu ermöglichen.

### HINTERGRUND

Elektrische Versorgungsnetze verfügen über begrenzte freie Kapazitäten. Ein weiterer Kapazitätsbedarf in den elektrischen Versorgungsnetzen wird durch den Ausbau regenerativer Energiequellen (beispielsweise von Photovoltaikanlagen, Windkraftanlagen, etc.), der Elektrifizierung der Wärmeerzeugung (beispielsweise mit Hilfe von Wärmepumpen) und den Ausbau der E-Mobilität hervorgerufen. Um teure Netzausbauten zu vermeiden, setzen Energienetzbetreiber immer häufiger intelligente Netzmanagementsysteme ein, welche an das elektrische Versorgungsnetz angeschlossene Lasten, Energieerzeuger und/oder Energiespeicher hinsichtlich der Energieaufnahme aus und der Energieabgabe in das elektrische Versorgungsnetz steuern.

In elektrischen Versorgungsnetzen muss sichergestellt werden, dass es zu keiner Überlastung kommt und die Netzstabilität gewährleistet wird. Um insbesondere Beschädigungen von Transformatoren durch thermische Überlastung zu vermeiden, muss sichergestellt werden, dass Maßnahmen zum Reduzieren von Überlasten mit einer Reaktionszeit im Sekundenbereich eingeleitet werden. Die "Engineering Recommendation G100" der Energy Networks Association (ENA) in Großbritannien schreibt beispielsweise vor, das Maßnahmen zum Überlastschutz von Transformatoren mit einer Reaktionszeit innerhalb von 5 Sekunden eingeleitet werden müssen. Ähnliche Regelungen gibt es in anderen Ländern. Von den Energienetzbetreibern eingesetzte intelligente Netzmanagementsysteme, insbesondere Netzmanagementsysteme, die zur Kommunikation auf das Internet zurückgreifen, können solche Reaktionszeiten aber nicht in allen Betriebssituationen gewährleisten.

Die DE 102012220846 B3 betrifft eine Zentraleinheit, welche über eine Vielzahl von Leitungssträngen in einem Niederspannungsnetz mit einer Vielzahl von dezentralen Einheiten verbunden ist. Die Zentraleinheit ist dazu eingerichtet, eine Befehlsnachricht über einen Leitungsstrang an eine bestimmte dezentrale Einheit zu senden. Nachteilig bei dieser Technik zur Kommunikation zwischen der Zentraleinheit und der Vielzahl von dezentralen Einheiten ist jedoch, dass keine intelligente Steuerung der dezentralen Einheiten über ein Netzmanagementsystem erfolgt.

### KURZER ABRISS

Der vorliegenden Offenbarung liegt die Aufgabe zugrunde, eine Technik zur Steuerung einer dezentralen Einheit in einem elektrischen Versorgungsnetz bereitzustellen, die eine dynamische Steuerung der dezentralen Einheit ermöglicht und dabei sicherstellt, dass Überlastsituationen mit einer kurzen Reaktionszeit behoben werden.

Zur Lösung dieser Aufgabe wird ein Verfahren zum Steuern einer dezentralen Einheit in einem elektrischen Versorgungsnetz vorgeschlagen, welches die folgenden durch die dezentrale Einheit ausgeführten Verfahrensschritte umfasst: Empfangen, von einer Zentraleinheit in dem elektrischen Versorgungsnetz über eine erste Kommunikationsverbindung, einer ersten Steuerungsinformation für die dezentrale Einheit, Empfangen, von einem Server über eine zweite Kommunikationsverbindung, einer zweiten Steuerungsinformation für die dezentrale Einheit, Steuern der dezentralen Einheit in Abhängigkeit von der ersten und/oder der zweiten Steuerungsinformation, wobei die erste Kommunikationsverbindung und die zweite Kommunikationsverbindung verschiedene Kommunikationsverbindungen sind.

Bei dem elektrischen Versorgungsnetz kann es sich um ein Niederspannungsnetz handeln, insbesondere ein Niederspannungsnetz, welches von einem Mittelspannungsnetz gespeist wird. Das elektrische Versorgungsnetz kann ferner als ein intelligentes Stromnetz, ein sogenanntes "Smart Grid", ausgebildet sein. Die dezentrale Einheit kann eine elektrische Last (beispielsweise einen elektrischen Verbraucher), einen elektrischen Energieerzeuger (beispielsweise eine Photovoltaikanlage) und/oder einen elektrischen Energiespeicher (beispielsweise eine Batterie) umfassen. So kann von der dezentralen Einheit Energie in das elektrische Versorgungsnetz gespeist oder aus dem elektrischen Versorgungsnetz bezogen werden. Weitere elektrische Bauelemente zum Steuern und/oder Messen der elektrischen Last, des elektrischen Energieerzeugers und/oder des elektrischen Energiespeichers können in der dezentralen Einheit enthalten sein. Insbesondere kann die dezentrale Einheit in einem Haus bzw. einem Gebäude integriert sein.

Bei der Zentraleinheit kann es sich um eine Transformatorstation oder eine Transformatorunterstation handeln, in der elektrische Energie von Verteilernetzen im Mittelspannungsbereich (z.B. 3 bis 30 kV in Deutschland) auf die in Haushalten übliche Niederspannung (z.B. 230 V bzw. 400 V in Deutschland) transformiert wird. Die Transformatorstation kann eine Primärtechnik mit einem Leistungstransformator, einer Mittelspannungsschaltanlage und einer Niederspannungsverteilung, und eine Sekundärtechnik mit Automatisierungs- und Fernwirktechnik, Energiezählern und einer Kommunikationsvorrichtung umfassen.

Der Server kann eine Recheneinheit mit einer Speichereinheit in einer Rechnerwolke, insbesondere einen sogenannten "Cloud-Rechner" umfassen.

Die dezentrale Einheit erhält verschiedene Steuerungsinformationen über zwei separate Kommunikationsverbindungen. Insbesondere kann es sich dabei um zwei unabhängige Kommunikationsverbindungen handeln. Unabhängig bedeutet in diesem Zusammenhang, dass zwei physikalisch separate Kommunikationswege vorgesehen sind, so dass eine Kommunikation über die erste Kommunikationsverbindung auch dann möglich ist, wenn die zweite Kommunikationsverbindung ausgefallen ist. Dadurch ist es möglich, die erste Kommunikationsverbindung und die zweite Kommunikationsverbindung für unterschiedliche Zwecke zu optimieren.

So kann die erste Kommunikationsverbindung als ein stabiles Kommunikationsmittel ausgelegt sein, welches eine schnelle Reaktion auf Netzprobleme ermöglicht, Netzausfallsicherheit gewährleistet und Kommunikationssicherheit bereitstellt. Insbesondere kann die erste Kommunikationsverbindung derart ausgebildet sein, dass nur eine relativ geringe Datenmenge, diese geringe Datenmenge jedoch sicher, von der Zentraleinheit an die dezentrale Einheit gesendet wird. Ferner kann die erste Kommunikationsverbindung so ausgestaltet sein, dass die Reaktionszeit 5 Sekunden nicht überschreitet. So kann mit Hilfe der ersten Steuerungsinformation gewährleistet werden, dass immer eine Mindeststeuerung der dezentralen Einheit erfolgt. Des Weiteren kann das Senden der ersten Steuerungsinformation über die erste Kommunikationsverbindung verschlüsselt und/oder basierend auf einer digitalen Signatur erfolgen.

Insbesondere kann es sich bei der ersten Kommunikationsverbindung um eine Powerline Communication-, PLC, Kommunikationsverbindung zwischen der Zentraleinheit und der dezentralen Einheit handeln. Vorzugsweise handelt es sich um eine Narrowband- (NB) PLC-Kommunikationsverbindung. So kann die Kommunikation zwischen Zentraleinheit und dezentraler Einheit über einen Verteilungsstrang des Niederspannungsnetzes erfolgen, wobei die erste Steuerungsinformation über ein PLC-Modem und eine Kapazität in der Zentraleinheit in den Verteilungsstrang eingekoppelt und die gesendete erste Steuerungsinformation über eine Kapazität und ein PLC-Modem in der dezentralen Einheit wieder ausgekoppelt wird. Dadurch kann auf eine störanfällige Funkverbindung verzichtet werden. Je nach Ausgestaltung der PLC-Kommunikationsverbindung kann des Weiteren ein Management-Server vorgesehen sein, der eine ordnungsgemäße Funktion der PLC-Kommunikationsverbindung überwacht und steuert. Es ist aber denkbar, dass die erste Kommunikationsverbindung zusätzlich oder alternativ eine drahtgebundene Kommunikationsverbindung (beispielsweise über Ethernet) oder eine drahtlose Funkverbindung (beispielsweise über ein 5G Mobilfunknetz) umfasst.

Da die erste Kommunikationsverbindung ausfallsicher ausgelegt ist, kann die zweite Kommunikationsverbindung als Optimierungshilfsmittel ausgelegt sein, welches eine Optimierung der Steuerung der dezentralen Einheit ermöglicht. Dadurch ist es möglich, dass ohne einen Netzausbau weitere dezentrale Einheiten mit der Zentraleinheit verbunden werden können. Insbesondere kann die zweite Steuerungsinformation Grenzbedingungen für die Steuerung der dezentralen Einheit vorgeben, so dass die über die erste Kommunikationsverbindung an die dezentrale Einheit gesendete erste Steuerungsinformation nicht angewendet werden muss.

Da eine Ausfallsicherheit der zweiten Kommunikationsvorrichtung nicht gewährleistet werden muss, kann die zweite Kommunikationsverbindung als eine Internet-Protokoll-, IP, basierte Kommunikationsverbindung ausgebildet sein. Insbesondere kann es sich bei der zweiten Kommunikationsverbindung um eine bidirektionale Kommunikationsverbindung handeln. So kann die zweite Kommunikationsverbindung beispielsweise als Ethernet, Global System for Mobile Communications (GSM) Mobilfunknetz, Digital Subscriber Line (DSL) Netz, Wireless Local Area Network (WLAN) und/oder Long Range Wide Area Network (LoRaWAN) realisiert werden. Ferner kann über die zweite Kommunikationsverbindung eine dynamische Steuerung der dezentralen Einheit ermöglicht werden. So stellt die erste Kommunikationsverbindung eine höhere Ausfallsicherheit als die zweite Kommunikationsverbindung bereit, wobei angestrebt wird, die erste Kommunikationsverbindung derart auszulegen, dass sie nicht ausfällt, wohingegen ein Ausfall der zweiten Kommunikationsverbindung toleriert werden kann. Da die Ausfallsicherheit der ersten Kommunikationsverbindung wichtiger als die Ausfallsicherheit der zweiten Kommunikationsverbindung ist, kann bei der zweiten Kommunikationsverbindung der Aufwand hinsichtlich der Kommunikationssicherheit (Verschlüsselung, digitale Signatur, etc.) geringer gehalten werden. Ferner kann das Verfahren derart ausgelegt sein, dass eine Steuerung der dezentralen Einheit auch dann gewährleistet wird, wenn nur die erste Kommunikationsverbindung verfügbar ist, d.h. die zweite Kommunikationsverbindung ganz oder teilweise ausgefallen ist. Insbesondere kann die erste Kommunikationsverbindung als Schutzmechanismus und die zweite Kommunikationsverbindung als Optimierungsmechanismus ausgelegt werden.

Um die erste Kommunikationsverbindung vorrangig zum ausfallsicheren Schutz der Zentraleinheit bzw. des elektrischen Versorgungsnetzes zu nutzen, kann die erste Kommunikationsverbindung als eine direkte, unidirektionale Kommunikationsverbindung zwischen der Zentraleinheit und der dezentralen Einheit ausgebildet sein. "Direkt" bedeutet in diesem Zusammenhang, dass die erste Steuerungsinformation unverändert und auf direktem Weg von der Zentraleinheit an die dezentrale Einheit gesendet wird, wobei "unidirektional" in diesem Zusammenhang bedeutet, dass Daten ausschließlich von der Zentraleinheit an die dezentrale Einheit gesendet werden.

So kann es sich bei der ersten Steuerungsinformation, die über die erste Kommunikationsverbindung von der Zentraleinheit an die dezentrale Einheit gesendet wird, um einen maximalen Leistungssollwert der dezentralen Einheit handeln. Dadurch kann eine Überlastsituation in der Zentraleinheit (beispielsweise in einem in der Zentraleinheit verbauten Transformator), dem Niederspannungsnetz und/oder dem Mittelspannungsnetz vermieden werden kann. Dazu kann die Zentraleinheit einen gegenwärtigen Wert des maximalen Leistungssollwerts berechnen und an die dezentrale Einheit senden. Ferner kann ein Überwachungssystem (beispielsweise ein PLC-Überwachungssystem) eine Verfügbarkeit der ersten Kommunikationsverbindung prüfen und nur bei Verfügbarkeit der ersten Kommunikationsverbindung die erste Steuerungsinformation von der Zentraleinheit an die dezentrale Einheit senden. Diese Überprüfung der Verfügbarkeit kann ohne ein Senden von Anwendungsdaten erfolgen.

Für eine weitere Optimierung der Steuerung der dezentralen Einheit kann die über die zweite Kommunikationsverbindung von dem Server an die dezentrale Einheit gesendete zweite Steuerungsinformation Steuerungsdaten zum Verringern einer Leistungsaufnahme der dezentralen Einheit aus dem elektrischen Versorgungsnetz, Steuerungsdaten zum Verringern einer Leistungsabgabe der dezentralen Einheit in das elektrischen Versorgungsnetz, Steuerungsdaten zum Erhöhen einer Leistungsaufnahme der dezentralen Einheit aus dem elektrischen Versorgungsnetz, Steuerungsdaten zum Erhöhen einer Leistungsabgabe der dezentralen Einheit in das elektrischen Versorgungsnetz, Steuerungsdaten zum Unterbrechen einer Leistungsaufnahme der dezentralen Einheit aus dem elektrischen Versorgungsnetz und/oder Steuerungsdaten zum Unterbrechen einer Leistungsabgabe der dezentralen Einheit in das elektrischen Versorgungsnetz umfassen.

Ein weiterer Aspekt der vorliegenden Offenbarung betrifft eine dem vorstehend beschriebenen Verfahren entsprechende dezentrale Einheit in einem elektrischen Versorgungsnetz, die erste Empfangsmittel, die dazu eingerichtet sind, von einer Zentraleinheit in dem elektrischen Versorgungsnetz über eine erste Kommunikationsverbindung eine erste Steuerungsinformation für die dezentrale Einheit zu empfangen, zweite Empfangsmittel, die dazu eingerichtet sind, von einem Server über eine zweite Kommunikationsverbindung, eine zweite Steuerungsinformation für die dezentrale Einheit zu empfangen, und Steuerungsmittel, die dazu eingerichtet sind, die dezentrale Einheit in Abhängigkeit von der ersten und/oder der zweiten Steuerungsinformation zu steuern, umfasst, wobei die erste Kommunikationsverbindung und die zweite Kommunikationsverbindung verschiedene Kommunikationsverbindungen sind.

Bei den ersten Empfangsmitteln kann es sich beispielsweise um eine PLC-Kommunikationsvorrichtung mit einem PLC-Modem und bei den zweiten Empfangsmitteln um eine Mobilfunk- oder Ethernet-Schnittstelle handeln. Die Steuerungsmittel können dazu eingerichtete sein, eine Energieaufnahme aus und/oder eine Energieabgabe in das elektrische Versorgungsnetz zu steuern. So kann es sich bei den Steuerungsmitteln beispielweise um einen gesteuerten Wechselrichter handeln, der eine Energieeinspeisung von einer Photovoltaikanlage der dezentralen Einheit in das elektrische Versorgungsnetz steuert, oder einen Lastschalter, der einen elektrischen Verbraucher der dezentralen Einheit von dem elektrischen Versorgungsnetz nehmen kann.

Ein weiterer Aspekt der vorliegenden Offenbarung betrifft ein Verfahren zum Steuern einer dezentralen Einheit in einem elektrischen Versorgungsnetz, umfassend die folgenden durch eine Zentraleinheit in dem elektrischen Versorgungsnetz ausgeführten Verfahrensschritte: Senden, an die dezentrale Einheit über eine erste Kommunikationsverbindung, einer ersten Steuerungsinformation für die dezentrale Einheit, Senden, an einen mit der dezentralen Einheit über eine zweite Kommunikationsverbindung in Kommunikationsverbindung stehenden Server über die zweite Kommunikationsverbindung, von Leistungsdaten, wobei die erste Kommunikationsverbindung und die zweite Kommunikationsverbindung verschiedene Kommunikationsverbindungen sind.

Wie bei dem durch die dezentrale Einheit ausgeführten Verfahren kann dieses durch die Zentraleinheit ausgeführte Verfahren ermöglichen, dass über die erste Kommunikationsverbindung eine ausfallsichere und reaktionsschnelle Steuerung der dezentralen Einheit erfolgt, wobei über die zweite Kommunikationsverbindung die Steuerung der dezentralen Einheit optimiert werden kann.

Bei den Leistungsdaten kann es sich insbesondere um die erste Steuerungsinformation handeln, welche die Zentraleinheit über die erste Kommunikationsverbindung an die dezentrale Einheit sendet, so dass der Server in die Lage versetzt wird, eine in der ersten Steuerungsinformation enthaltene Grenzbedingung bei der Erzeugung der zweiten Steuerungsinformation zu berücksichtigen. Dadurch kann ermöglicht werden, dass eine in der ersten Steuerungsinformation enthaltene Grenzbedingung im Normalfall nicht angewendet werden muss.

Damit der Server eine derartige zweite Steuerungsinformation erzeugen kann, mit welcher die dezentrale Einheit optimiert gesteuert wird, kann das Verfahren ferner den Verfahrensschritt Senden, an den Server über die zweite Kommunikationsverbindung, von Leistungsdaten, die mit der dezentralen Einheit und/oder einer Vielzahl von dezentralen Einheiten (beispielsweise 100 dezentrale Einheiten) in dem elektrischen Versorgungsnetz in Zusammenhang stehen, umfassen. Da die Zentraleinheit über eine Vielzahl von Verteilersträngen mit einer Vielzahl von dezentralen Einheiten elektrisch verbunden sein kann, die Zentraleinheit mit dem Server kommuniziert und der Server die Vielzahl von dezentralen Einheiten mit zweiten Steuerungsinformationen versorgen kann, hat der Server einen Gesamtüberblick zu dem Netzzustand des elektrischen Versorgungsnetzes und kann so die dezentrale Einheit bzw. die Vielzahl von dezentralen Einheiten optimiert steuern.

So kann die zweite Steuerungsinformation als ein Puffer wirken, wobei die erste Steuerungsinformation, d.h. eine Grenzbedingung der ersten Steuerungsinformation, nur in Ausnahmefällen in der dezentralen Einheit angewendet werden muss. Im Normalfall erfolgt die Steuerung der dezentralen Einheit an Hand der zweiten Steuerungsinformation.

Ein weiterer Aspekt der vorliegenden Offenbarung betrifft eine dem vorstehend beschriebenen Verfahren entsprechende Zentraleinheit in einem elektrischen Versorgungsnetz, die erste Sendemittel, die dazu eingerichtet sind, an eine dezentrale Einheit in dem elektrischen Versorgungsnetz über eine erste Kommunikationsverbindung eine erste Steuerungsinformation für die dezentrale Einheit zu senden, und zweite Sendemittel, die dazu eingerichtet sind, an einen mit der dezentralen Einheit über eine zweite Kommunikationsverbindung in Kommunikationsverbindung stehenden Server über die zweite Kommunikationsverbindung Leistungsdaten zu senden, umfasst, wobei die erste Kommunikationsverbindung und die zweite Kommunikationsverbindung verschiedene Kommunikationsverbindungen sind.

Bei den ersten Sendemitteln kann es sich beispielsweise um eine PLC-Kommunikationsvorrichtung mit einem PLC-Modem und bei den zweiten Sendemitteln um eine Mobilfunk- oder Ethernet-Schnittstelle handeln, die eine IP-basierte Datenkommunikation unterstützt.

Gemäß einer Ausführungsform ist die Zentraleinheit dazu eingerichtet, ein Vielzahl von maximalen Leistungssollwerten an eine Vielzahl von dezentralen Einheiten in dem elektrischen Versorgungsnetz zu senden. Dies kann jeweils über separate Kommunikationsverbindungen erfolgen, die der ersten Kommunikationsverbindung entsprechen. Dadurch kann die Zentraleinheit eine ausfallsichere Mindeststeuerung der Vielzahl von dezentralen Einheiten bereitstellen.

Ferner kann eine Infrastruktur-Steuerungseinheit bei der Zentraleinheit vorgesehen sein, die eine weitere Lastoptimierung basierend auf einer Kommunikation mit den dezentralen Einheiten und/oder dem Server ausführt.

Ein weiterer Aspekt der vorliegenden Offenbarung betrifft ein Verfahren zum Steuern einer dezentralen Einheit in einem elektrischen Versorgungsnetz, umfassend die folgenden durch einen Server ausgeführten Verfahrensschritte: Empfangen, von einer Zentraleinheit in dem elektrischen Versorgungsnetz, von Leistungsdaten, Erzeugen, basierend auf den Leistungsdaten, von zweiter Steuerungsinformation für die dezentrale Einheit, und Senden, an die dezentrale Einheit, der zweiten Steuerungsinformation für die dezentrale Einheit.

So kann der Server dazu eingerichtet sein, basierend auf den empfangenen Leistungsdaten zweite Steuerungsinformation zu erzeugen, mit dessen Hilfe die dezentrale Einheit dynamisch gesteuert werden kann. Insbesondere kann der Server von der Zentraleinheit die von der Zentraleinheit an die dezentrale Einheit gesendete erste Steuerungsinformation als Leistungsdaten empfangen, was dem Server ermöglicht, eine derartige zweite Steuerungsinformation zu erzeugen, so dass die erste Steuerungsinformation nur im Ausnahmefall angewendet werden muss.

Für eine optimierte dynamische Steuerung der zentralen Einheit kann das Verfahren ferner die Schritte Empfangen, von einer Vielzahl von dezentralen Einheiten in dem elektrischen Versorgungsnetz, von Leistungsdaten der Vielzahl von dezentralen Einheiten, und Erzeugen, basierend auf den Leistungsdaten der Vielzahl von dezentralen Einheiten, der zweiten Steuerungsinformation für die dezentrale Einheit, umfassen. Da der Server nicht nur Leistungsdaten hinsichtlich einer dezentralen Einheit, sondern Leistungsdaten hinsichtlich aller an das elektrische Versorgungsnetz angeschlossenen dezentralen Einheiten erhält, kann der Server mit Hilfe der zweiten Steuerungsinformation die dezentrale Einheit (und die weiteren dezentralen Einheiten des elektrischen Versorgungsnettes) basierend auf einer Gesamtanalyse der Netzsituation in dem elektrischen Versorgungsnetz steuern.

In diesem Zusammenhang kann der Server dazu eingerichtet sein, nicht nur die zweite Steuerungsinformation an die dezentrale Einheit, sondern weitere Steuerungsinformationen an eine Vielzahl von dezentralen Einheiten in dem elektrischen Versorgungsnetz zu senden. Dadurch ist es möglich, eine koordinierte Gesamtsteuerung aller dezentralen Einheiten in dem elektrischen Versorgungsnetz auszuführen, wodurch die Zentraleinheit bzw. das elektrische Versorgungsnetz vor Überlasten geschützt werden kann.

Zum Ermöglichen einer situationsabhängigen Steuerung der dezentralen Einheit kann das Erzeugen der zweiten Steuerungsinformation ferner auf einer Lastvorhersage der dezentralen Einheit und/oder einer Vielzahl von dezentralen Einheiten in dem elektrischen Versorgungsnetz, einer Wettervorhersage, einer Zeitangabe, und/oder Lastprofilen der dezentralen Einheit und/oder einer Vielzahl von dezentralen Einheiten in dem elektrischen Versorgungsnetz basieren. Entsprechende Daten kann der Server von weiteren mit dem Server in Kommunikationsverbindung stehenden Servern erhalten. Der Server kann diese Daten analysieren und basierend darauf die die zweiten Steuerungsinformationen berechnen.

Umfasst die dezentrale Einheit beispielsweise eine Ladestation für Elektrofahrzeuge, so kann der Server bei der Erzeugung der zweiten Steuerungsinformation berücksichtigen, dass das elektrische Versorgungsnetz üblicherweise nachts nicht wesentlich ausgelastet ist, so dass Elektrofahrzeuge bevorzugt nachts mit elektrischer Energie geladen werden.

Ferner kann die zweite Steuerungsinformation von dem Server basierend auf einer Hochlauf- oder einer Runterlauf-Funktion zum Reduzieren von Netzdynamiken erzeugt werden, wodurch Lastsprünge verhindert werden können. So kann durch die Hochlauf- bzw. Runterlauf-Funktion die Dynamik des Energieflusses reduziert werden. Insbesondere kann durch die Runterlauf-Funktion eine Heruntersteuerung der Leistungsabgabe der dezentralen Einheit in das elektrische Versorgungsnetz ermöglicht werden, wenn die dezentrale Einheit zu viel Energie in das elektrische Versorgungsnetz speist. Mit Hilfe der zweiten Steuerungsinformation können auch Lasten vorab gesteuert werden, so dass ein gegenwärtiger Leistungswert der dezentralen Einheit unterhalb einem maximalen Leistungswert der dezentralen Einheit liegt.

Des Weiteren kann der Server dazu eingerichtet sein, basierend auf Daten der Zentraleinheit und aller über das elektrische Versorgungsnetz mit der Zentraleinheit verbundenen dezentralen Einheiten einen Optimierungsalgorithmus auszuführen, welcher Steuerungsinformationen für die Vielzahl von dezentralen Einheiten erzeugt, wodurch Netzinstabilitäten vermieden und die Zentraleinheit geschützt werden kann. Diese Steuerung kann des Weiteren umfassen, dass eine in der ersten Steuerungsinformation enthaltene Steuerungsbedingung für die dezentrale Einheit nicht erreicht wird. So kann beispielsweise durch die zweite Steuerungsinformation verhindert werden, dass eine durch die erste Steuerungsinformation auszulösende Abschaltung der dezentralen Einheit eintritt.

Ferner kann der Server eine Maschinenlernvorrichtung umfassen, welche basierend auf einigen oder mehreren der vorstehend beschriebenen Daten und/oder historischen Daten optimierte Werte der zweiten Steuerungsinformationen berechnet. Die Maschinenlernvorrichtung kann ferner dazu eingerichtet sein, Flexibilität in dem elektrischen Versorgungsnetz zu lernen und diese bei der Erzeugung der zweiten Steuerungsinformation zu berücksichtigen.

Ein weiterer Aspekt der vorliegenden Offenbarung betrifft einen dem vorstehend beschriebenen Verfahren entsprechenden Server zum Steuern einer dezentralen Einheit in einem elektrischen Versorgungsnetz, umfassend: Server-Kommunikationsmittel, die dazu eingerichtet sind, von einer Zentraleinheit in dem elektrischen Versorgungsnetz Leistungsdaten zu empfangen, und Erzeugungsmittel, die dazu eingerichtet sind, basierend auf den Leistungsdaten zweite Steuerungsinformation für die dezentrale Einheit zu erzeugen, wobei die Server-Kommunikationsmittel ferner dazu eingerichtet sind, die zweite Steuerungsinformation für die dezentrale Einheit an die dezentrale Einheit zu senden.

Bei den Server-Kommunikationsmitteln kann es sich um eine Kommunikationsschnittstelle handeln, welche den Server sowohl mit der Zentraleinheit als auch mit der dezentralen Einheit für eine bidirektionale Kommunikation verbindet. So gibt es bei der zweiten Kommunikationsverbindung keine direkte Kommunikationsverbindung zwischen Zentraleinheit und dezentraler Einheit, und jegliche Kommunikation zwischen Zentraleinheit und dezentraler Einheit erfolgt über den Server. Dabei kann die Kommunikation über eine IP-basierte Kommunikation erfolgen. Ferner kann der Server dazu eingerichtet sein, über die IP-basierte Kommunikation mit einer Vielzahl von dezentralen Einheiten bidirektional zu kommunizieren. Der Server kann ferner dazu eingerichtet sein, falsche Messwerte, sogenannte "Frozen Values", eines Stromzählers in der dezentralen Einheit zu erkennen.

Bei den Erzeugungsmitteln kann es sich um eine Recheneinheit in der "Cloud" handeln, die Leistungsdaten betreffend die Zentraleinheit und eine Vielzahl von dezentralen Einheiten in dem elektrischen Versorgungsnetz empfängt, diese verarbeitet und daraus die zweite Steuerungsinformation für die dezentrale Einheit berechnet. Ferner kann in dem Server eine Speichereinheit vorgesehen sein. Des Weiteren können die Erzeugungsmittel Steuerungsinformationen für weitere an das elektrische Versorgungsnetz angeschlossene dezentrale Einheiten erzeugen. Die Erzeugungsmittel können für die Erzeugung der zweiten Steuerungsinformation auch zusätzliche Informationen, wie eine Lastvorhersage der dezentralen Einheit und/oder einer Vielzahl von dezentralen Einheiten in dem elektrischen Versorgungsnetz, eine Wettervorhersage, eine Zeitangabe, und/oder Lastprofile der dezentralen Einheit und/oder einer Vielzahl von dezentralen Einheiten in dem elektrischen Versorgungsnetz, berücksichtigen.

Werden über die erste Kommunikationsverbindung nicht nur die erste Steuerungsinformation, sondern weitere Steuerungsinformationen von der Zentraleinheit an die dezentrale Einheit gesendet, so kann ferner vorgesehen sein, mit Hilfe dieser Steuerungsinformationen die Funktionalität der von dem Server ausgeführten Optimierung der Steuerung der dezentralen Einheit zu validieren.

Ein weiterer Aspekt der vorliegenden Offenbarung betrifft ein Verfahren zum Steuern einer dezentralen Einheit in einem elektrischen Versorgungsnetz, das einen oder mehrere der vorstehend beschriebenen Verfahrensschritte der dezentralen Einheit, einen oder mehrere der vorstehend beschriebenen Verfahrensschritte der Zentraleinheit, und/oder einen oder mehrere der vorstehend beschriebenen Verfahrensschritte des Servers umfasst.

Schließlich betrifft die vorliegende Offenbarung ein Kommunikationsnetz, das eine erste Kommunikationsverbindung, welche eine Zentraleinheit in einem elektrischen Versorgungsnetz und eine dezentrale Einheit in dem elektrischen Versorgungsnetz verbindet, und eine zweite Kommunikationsverbindung, welche die Zentraleinheit und die dezentrale Einheit über einen Server verbindet, umfasst, wobei die erste Kommunikationsverbindung und die zweite Kommunikationsverbindung verschiedene Kommunikationsverbindungen sind.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren Vorrichtungen und Netze ergeben sich aus der nachfolgenden Beschreibung von Ausführungsbeispielen und der Figuren.
- Fig. 1: zeigt eine schematische Darstellung eines ersten Ausführungsbeispiels eines Kommunikationsnetzes für ein elektrisches Versorgungsnetz mit einer dezentralen Einheit, einer Zentraleinheit und einem Server;
- Fig. 2: zeigt ein Flussdiagramm eines Ausführungsbeispiels eines ersten Verfahrens zum Steuern einer dezentralen Einheit;
- Fig. 3: zeigt ein Flussdiagramm eines Ausführungsbeispiels eines zweiten Verfahrens zum Steuern einer dezentralen Einheit;
- Fig. 4: zeigt ein Flussdiagramm eines Ausführungsbeispiels eines dritten Verfahrens zum Steuern einer dezentralen Einheit; und
- Fig. 5: zeigt eine schematische Darstellung eines zweiten Ausführungsbeispiels eines Kommunikationsnetzes für ein elektrisches Versorgungsnetz mit einer Vielzahl von dezentralen Einheiten, einer Zentraleinheit und einem Server.

### DETAILLIERTE BESCHREIBUNG

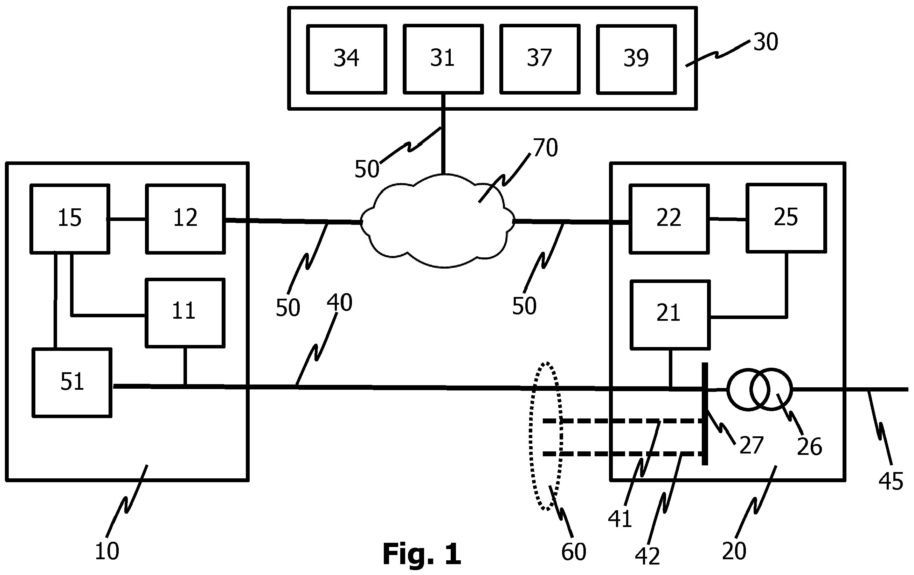

Die Fig. 1 zeigt eine schematische Darstellung eines ersten Ausführungsbeispiels eines Kommunikationsnetzes für ein elektrisches Versorgungsnetz 60 mit einer dezentralen Einheit 10, einer Zentraleinheit 20 und einem Cloud-Server 30.

Die Zentraleinheit 20 ist über eine erste Kommunikationsverbindung 40 und eine zweite Kommunikationsverbindung 50 mit der dezentralen Einheit 10 verbunden. Bei der ersten Kommunikationsverbindung 40 handelt es sich um eine PLC-Kommunikationsverbindung und bei der zweiten Kommunikationsverbindung 50 handelt es sich um eine IP-basierte Kommunikationsverbindung über das Internet 70 und den Cloud-Server 30.

Die erste Kommunikationsverbindung 40 basiert auf einem Verteilungsstrang eines Niederspannungsnetzes 60, welches von einem Mittelspannungsnetz 45 gespeist wird. Bei der Zentraleinheit 20 handelt es sich um eine Transformatorstation zwischen dem Niederspannungsnetz 60 und dem Mittelspannungsnetz 45. Durch den Transformator 26 wird die Mittelspannung des Mittelspannungsnetzes 45 in eine Niederspannung transformiert, die von dem Verteiler 27 in eine Vielzahl von Verteilungssträngen 40, 41 und 42 des Niederspannungsnetzes 60 verteilt wird. Beispielsweise können an den Verteiler 27 über 100 Verteilungsstränge angeschlossen sein (in Fig. 1 nicht gezeigt).

Die Zentraleinheit 20 umfasst ferner ein PLC-Modem 21, welches über eine Kapazität (in Fig. 1 nicht gezeigt) erste Steuerungsinformation in die erste Kommunikationsverbindung 40 zum Senden an die dezentrale Einheit 10 einkoppeln kann. Weitere in Fig. 1 nicht gezeigte elektrische Bauelemente, wie eine Trennstelle, ein Hochfrequenzfilter, eine Kopplungseinheit, Datenleitungen und Endgeräte, können in der Zentraleinheit 20 vorgesehen sein. Des Weiteren ist in der Zentraleinheit 20 eine Kommunikationsvorrichtung 22 vorgesehen, mit deren Hilfe die Zentraleinheit 20 über die zweite Kommunikationsverbindung 50 (und das Internet 70) mit dem Cloud-Server 30 kommunizieren kann. Zusätzlich umfasst die Zentraleinheit 20 eine Steuerungseinheit 25, welche mit dem PLC-Modem 21 und der Kommunikationsvorrichtung 22 verbunden ist.

In der dezentralen Einheit 10 ist mindestens eine elektrische Vorrichtung 51 vorgesehen, die dazu eingerichtet ist, elektrische Energie in das Niederspannungsnetz 60 zu speisen und/oder elektrische Energie aus dem Niederspannungsnetz 60 zu beziehen. Bei der elektrischen Vorrichtung 51 kann es sich um eine elektrische Last (beispielsweise einen elektrischen Verbraucher), einen elektrischen Energieerzeuger (beispielsweise eine Photovoltaikanlage) und/oder einen elektrischen Energiespeicher (beispielsweise eine Lithium-Ionen-Batterie) handeln. Obgleich in der Fig. 1 nur eine elektrische Vorrichtung 51 gezeigt ist, können in der dezentralen Einheit 10 auch eine Vielzahl elektrischer Vorrichtungen 51 vorgesehen sein, wie beispielsweise eine Photovoltaikanlage und eine Lithium-Ionen-Batterie.

Entsprechend der Zentraleinheit 20 umfasst die dezentrale Einheit 10 ein PLC-Modem 11, welches dazu eingerichtet ist, die von der Zentraleinheit 20 über die erste Kommunikationsverbindung 40 gesendete erste Steuerungsinformation auszukoppeln. Dazu kann in der dezentralen Einheit 10 eine Kapazität vorgesehen sein (in Fig. 1 nicht gezeigt). Ferner können in der dezentralen Einheit 10 weitere in der Fig. 1 nicht gezeigte elektrische Bauelemente, wie eine Trennstelle, ein Filter, eine Kopplungseinheit, Datenleitungen und Endgeräte, vorgesehen sein.

Ferner umfasst die dezentrale Einheit 10 eine Kommunikationsvorrichtung 12, mit deren Hilfe die dezentrale Einheit 10 über die zweite Kommunikationsverbindung 50 (und das Internet 70) mit dem Cloud-Server 30 kommunizieren kann. Des Weiteren umfasst die dezentrale Einheit 10 eine Steuerungsvorrichtung 15, welche mit dem PLC-Modem 11, der Kommunikationsvorrichtung 22 und der elektrischen Vorrichtung 51 verbunden ist. Die Steuerungsvorrichtung 15 ist dazu eingerichtet, über das PLC-Modem 11 erste Steuerungsinformation von der Zentraleinheit 20 zu empfangen und über die Kommunikationsvorrichtung 12 von dem Cloud-Server 30 zweite Steuerungsinformation zu empfangen. Neben einer Recheneinheit kann die Steuerungsvorrichtung 15 Leistungselektronik zum Steuern der elektrischen Vorrichtung 51 umfassen. Ist die elektrische Vorrichtung 51 beispielsweise als eine Photovoltaikanlage ausgebildet, so kann die Steuerungsvorrichtung 15 einen steuerbaren Wechselrichter umfassen, welcher eine Einspeisung der von der Photovoltaikanlage erzeugten elektrischen Energie in das Niederspannungsnetz 60 steuert.

Der Cloud-Server 30 umfasst eine Kommunikationsvorrichtung 31, eine Recheneinheit 34, eine Speichereinheit 37 und eine Maschinenlernvorrichtung 39. Über die Kommunikationsvorrichtung 31 kann der Cloud-Server 30 bidirektional mit der Kommunikationsvorrichtung 12 der dezentralen Einheit 10 und der Kommunikationsvorrichtung 22 der Zentraleinheit 20 kommunizieren.

Bei einem Betrieb des Niederspannungsnetzes 60 muss sichergestellt werden, dass der Transformator 26 bzw. das Niederspannungsnetz 60 und das Mittelspannungsnetz 45 nicht überlastet wird. Eine Überlastung kann beispielsweise auftreten, wenn die elektrische Vorrichtung 51 der dezentralen Einheit 10 zusammen mit einer Vielzahl weiterer elektrischer Vorrichtungen von an das Niederspannungsnetz 60 angeschlossenen dezentralen Einheiten gleichzeitig elektrische Energie in das Niederspannungsnetz 60 einspeisen. In diesem Fall muss zum Schutz vor einer thermischen Überlastung des Transformators 26 in das Niederspannungsnetz 60 eingespeiste elektrische Energie im Sekundenbereich, beispielsweise innerhalb von 5 Sekunden, reduziert werden. Eine solche Reduzierung kann mit Hilfe der ersten Kommunikationsverbindung 40 und zusätzlich mit der zweiten Kommunikationsverbindung 50 ermöglicht werden.

Die als PLC-Verbindung ausgebildete erste Kommunikationsverbindung 40 weist eine hohe Ausfallsicherheit auf. So werden über die erste Kommunikationsverbindung 40 ausschließlich maximale Leistungssollwerte der dezentralen Einheit 10 von der Zentraleinheit 20 an die dezentrale Einheit 10 gesendet, d.h. es erfolgt nur ein unidirektionales Senden der maximalen Leistungssollwerte von der Zentraleinheit 20 an die dezentrale Einheit 10. Handelt es sich bei der elektrischen Vorrichtung 51 beispielsweise um eine Photovoltaikanlage, so kann der maximale Leistungssollwert 6 kW betragen, was bedeutet, dass die Photovoltaikanlage maximal 6 kW in das Niederspannungsnetz 60 einspeisen kann. Besteht eine Überlastsituation, so kann zum Schutz des Transformators 26 vor einer thermischen Überlastung die Energieabgabe der Photovoltaikanlage in das Niederspannungsnetz 60 reduziert bzw. ganz unterbrochen werden. Dazu sendet die Zentraleinheit 20 beispielsweise einen reduzierten maximalen Leistungssollwert von 1,5 kW an die dezentrale Einheit 10. Folglich kann mit Hilfe der ersten Kommunikationsverbindung 40 eine direkte, schnelle und ausfallsichere Steuerung der dezentralen Einheit 10 ermöglicht werden. Ferner kann vorgesehen sein, dass die über die erste Kommunikationsverbindung 40 gesendeten Daten vor dem Senden in der Zentraleinheit 20 verschlüsselt und/oder digital signiert werden. Dazu kann in der Zentraleinheit 20 eine Verschlüsselungs- bzw. Signaturvorrichtung (in Fig. 1 nicht gezeigt) vorgesehen sein. Eine entsprechende Entschlüsselungsvorrichtung kann in der dezentralen Einheit 10 vorgesehen sein (in Fig. 1 nicht gezeigt).

Anders als bei der PLC-Kommunikationsverbindung 40 besteht bei der zweiten Kommunikationsverbindung 50, die das öffentliche Internet 70 umfasst, eine höhere Wahrscheinlichkeit, dass die Kommunikationsverbindung ausfällt. Dies ist jedoch tolerierbar, da die mit einer höheren Ausfallsicherheit ausgebildete erste Kommunikationsverbindung 40 eine Mindeststeuerung der dezentralen Einheit 10 zum Schutz des Niederspannungsnetzes 60, des Transformator 26 und des Mittelspannungsnetzes 45 gewährleistet.

So wird die zweite Kommunikationsverbindung 50 für eine Optimierung der Steuerung der elektrischen Vorrichtung 51 durch die Steuerungsvorrichtung 15 eingesetzt. Dazu berechnet die Recheneinheit 34 in dem Cloud-Server 30 optimierte zweite Steuerungsinformationen, welche sie zum optimierten Steuern der elektrischen Vorrichtung 51 an die Steuerungsvorrichtung 15 sendet.

So kann die Recheneinheit 34 für die Berechnung der zweiten Steuerungsinformationen Daten von der Steuerungsvorrichtung 25 der Zentraleinheit 20 erhalten. Zusätzlich kann die Recheneinheit 34 eine Lastvorhersage der dezentralen Einheit 10 und/oder einer Vielzahl von dezentralen Einheiten in dem Niederspannungsnetz 60, eine Wettervorhersage, eine Zeitangabe, und/oder Lastprofile der dezentralen Einheit 10 und/oder einer Vielzahl von dezentralen Einheiten in dem Niederspannungsnetz 60 für die Berechnung der zweiten Steuerungsinformationen berücksichtigen. Beispielsweise kann der Cloud-Server 30 Informationen zu der Energieerzeugung aller in dem Niederspannungsnetz 60 angeschlossenen Photovoltaikanlagen empfangen und basierend darauf die zweiten Steuerungsinformationen berechnen bzw. erzeugen. Ferner ist es denkbar, dass der Cloud-Server 30 von in den dezentralen Einheiten installierten Stromzählern (sogenannten "Smart Metern") Messwerte erhält, und diese bei der Berechnung und Erzeugung der zweiten Steuerungsinformationen berücksichtigt. Berechnete und empfangene Werte können in der Speichereinheit 37 gespeichert werden.

Die Maschinenlernvorrichtung 39 dient zur weiteren Optimierung der durch die Recheneinheit 34 berechneten zweiten Steuerungsinformationen. So kann die Maschinenlernvorrichtung 39 auf historische Trainingsdatensätze zurückgreifen und basierend auf neu hinzukommenden Datensätzen die Berechnung der zweiten Steuerungsinformationen trainieren, testen und validieren. Bei der Maschinenlernvorrichtung 39 kann es sich beispielsweise um eine in dem Cloud-Server 30 installierte Künstliche-Intelligenz-Plattform (wie beispielsweise Microsoft Azure) handeln.

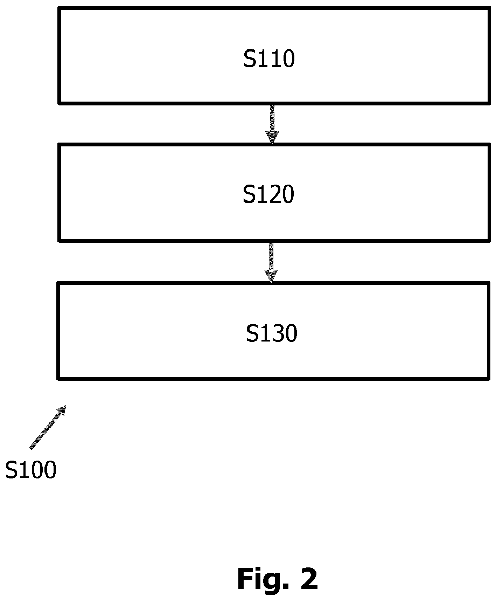

Die Fig. 2 zeigt ein Flussdiagramm eines Ausführungsbeispiels eines ersten Verfahrens S100 zum Steuern einer dezentralen Einheit, welches von der dezentralen Einheit ausgeführt wird. Das Verfahren kann insbesondere von der in der Fig. 1 gezeigten dezentralen Einheit 10 ausgeführt werden und wird nachfolgend unter Bezugnahme auf die Fig. 1 beschrieben, bei der die erste Kommunikationsverbindung 40 und die zweite Kommunikationsverbindung 50 als verschiedene Kommunikationsverbindungen ausgebildet sind.

In einem ersten Verfahrensschritt S110 empfängt das PLC-Modem 11 in der dezentralen Einheit 10 über die erste Kommunikationsverbindung 40 von der Zentraleinheit 20 eine erste Steuerungsinformation für die dezentrale Einheit 10. Bei der ersten Steuerungsinformation handelt es sich um einen maximalen Leistungssollwert der elektrischen Vorrichtung 51.

In einem zweiten Verfahrensschritt S120 empfängt die Kommunikationsvorrichtung 12 in der dezentralen Einheit 10 über die zweite Kommunikationsverbindung 50 von dem Cloud-Server 30 eine zweite Steuerungsinformation für die dezentrale Einheit 10. Bei der zweiten Steuerungsinformation handelte sich um einen weiteren Leistungssollwert der elektrischen Vorrichtung 51. Im Gegensatz zu dem von der Zentraleinheit 20 empfangenen maximalen Leistungssollwert der elektrischen Vorrichtung 51 handelt es sich bei dem von dem Cloud-Server 30 empfangenen Leistungssollwert jedoch um einen dynamischen Leistungssollwert, der die elektrische Vorrichtung 51 derart optimiert steuert, dass die Grenzbedingungen des von der Zentraleinheit 20 empfangenen maximalen Leistungssollwerts in der elektrischen Vorrichtung 51 keine Anwendung findet.

In einem dritten Verfahrensschritt S130 steuert die Steuerungsvorrichtung 15 der dezentralen Einheit 10 die elektrische Vorrichtung 51 in Abhängigkeit von der ersten und/oder der zweiten Steuerungsinformation, d.h. dem dynamischen Leistungssollwert und im Notfall dem maximalen Leistungssollwert.

Ist die elektrische Vorrichtung 51 beispielsweise eine Photovoltaikanlage, so wird mit Hilfe von dem von dem Cloud-Server 30 empfangenen Leistungssollwert eine Abgabe der von der Photovoltaikanlage erzeugten elektrischen Energie in das Niederspannungsnetz 60 derart gesteuert, dass zu Spitzenlastzeiten möglichst viel elektrische Energie in das Niederspannungsnetz 60 gespeist wird, wobei der maximale Leistungssollwert der Zentraleinheit 20 im Normalfall nicht erreicht wird. Tritt eine Überlastsituation an dem Transformator 26 auf, so greift der maximale Leistungssollwert und die Abgabe der elektrischen Energie durch die Photovoltaikanlage in das Niederspannungsnetz 60 wird auf den maximalen Leistungssollwert reduziert, wobei diese Reduzierung im Sekundenbereich, insbesondere innerhalb von 5 Sekunden, erfolgt.

Die Kommunikationsvorrichtung 12 der dezentralen Einheit 10 kann ferner von dem Cloud-Server 30 Steuerungsdaten zum Verringern einer Leistungsaufnahme der elektrischen Vorrichtung 51 aus dem Niederspannungsnetz 60, Steuerungsdaten zum Verringern einer Leistungsabgabe der elektrischen Vorrichtung 51 in das Niederspannungsnetz 60, Steuerungsdaten zum Erhöhen einer Leistungsaufnahme der elektrischen Vorrichtung 51 aus dem Niederspannungsnetz 60, Steuerungsdaten zum Erhöhen einer Leistungsabgabe der elektrischen Vorrichtung in das Niederspannungsnetz 60, Steuerungsdaten zum Unterbrechen einer Leistungsaufnahme der elektrischen Vorrichtung 51 aus dem Niederspannungsnetz 60 und/oder Steuerungsdaten zum Unterbrechen einer Leistungsabgabe der elektrischen Vorrichtung 51 in das Niederspannungsnetz 60 empfangen. Die Kommunikationsvorrichtung 12 leitet die empfangenen Steuerungsdaten an die Steuerungsvorrichtung 15 weiter.

Gemäß einer vorteilhaften Ausführungsform erfolgt eine Priorisierung der ersten Kommunikationsverbindung 40 gegenüber der zweiten Kommunikationsverbindung 50. Insbesondere kann vorgesehen sein, dass über die erste Kommunikationsverbindung 40 gesendete Daten und/oder Kommandos eine Priorität gegenüber über die zweite Kommunikationsverbindung 50 gesendete Daten und/oder Kommandos haben.

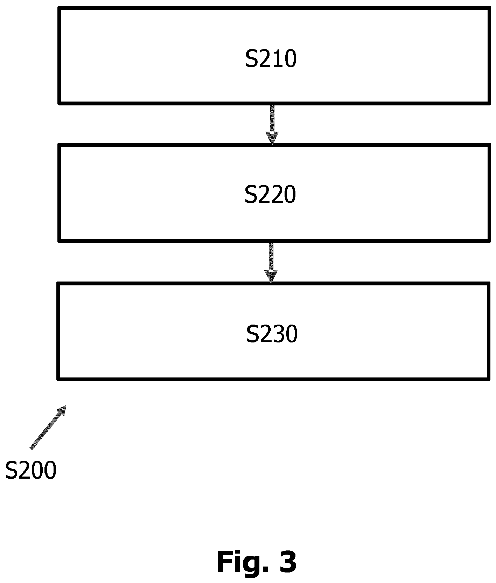

Die Fig. 3 zeigt ein Flussdiagramm eines Ausführungsbeispiels eines zweiten Verfahrens S200 zum Steuern einer dezentralen Einheit, welches von einer Zentraleinheit ausgeführt wird. Das Verfahren kann insbesondere von der in der Fig. 1 gezeigten Zentraleinheit 20 ausgeführt werden und wird nachfolgend unter Bezugnahme auf die Fig. 1 beschrieben, bei der die erste Kommunikationsverbindung 40 und die zweite Kommunikationsverbindung 50 als verschiedene Kommunikationsverbindungen ausgebildet sind.

In einem ersten Verfahrensschritt S210 sendet das PLC-Modem 21 der Zentraleinheit 20 über die erste Kommunikationsverbindung 40 einen maximalen Leistungssollwert der elektrischen Vorrichtung 51 an das PLC Modem 11 der dezentralen Einheit 10.

In einem zweiten Verfahrensschritt S220 sendet die Kommunikationsvorrichtung 22 der Zentraleinheit 20 über die zweite Kommunikationsverbindung 50 Leistungsdaten, welche die elektrische Vorrichtung 51 der dezentralen Einheit 10 betreffen, an die Kommunikationsvorrichtung 31 des Cloud-Servers 30. Bei den Leistungsdaten handelt es sich um Daten, welche die Recheneinheit 34 zum Berechnen von dynamischen Leistungssollwerten für die elektrische Vorrichtung 51 verwendet. Insbesondere kann es sich bei den Leistungsdaten um den maximalen Leistungssollwert der elektrischen Vorrichtung 51 handeln, den die Zentraleinheit 20 an die dezentrale Einheit 10 gesendet hat.

In einem dritten Verfahrensschritt S230 sendet die Kommunikationsvorrichtung 22 der Zentraleinheit 20 über die zweite Kommunikationsverbindung 50 Leistungsdaten, welche eine Vielzahl weiterer elektrischer Vorrichtungen von in dem Niederspannungsnetz 60 angeschlossenen dezentralen Einheiten betreffen, an die Kommunikationsvorrichtung 31 des Cloud-Servers 30. Bei diesen weiteren Leistungsdaten handelt es sich um Daten, welche die Recheneinheit 34 zum Berechnen von dynamischen Leistungssollwerten für die weiteren elektrischen Vorrichtungen verwendet. Insbesondere handelt es sich um maximale Leistungssollwerte der Vielzahl von weiteren elektrischen Vorrichtungen.

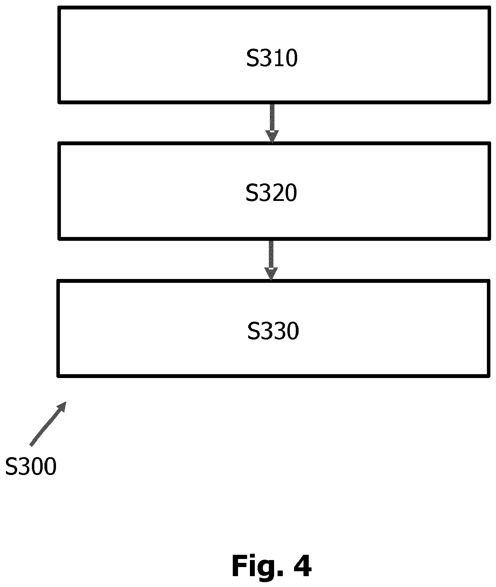

Die Fig. 4 zeigt ein Flussdiagramm eines Ausführungsbeispiels eines dritten Verfahrens S300 zum Steuern einer dezentralen Einheit, welches von einem Cloud-Server ausgeführt wird. Das Verfahren kann insbesondere von dem in der Fig. 1 gezeigten Cloud-Server 30 ausgeführt werden und wird nachfolgend unter Bezugnahme auf die Fig. 1 beschrieben, bei der die erste Kommunikationsverbindung 40 und die zweite Kommunikationsverbindung 50 als verschiedene Kommunikationsverbindungen ausgebildet sind.

In einem ersten Verfahrensschritt S310 empfängt die Kommunikationsvorrichtung 31 des Cloud-Servers 30 über die zweite Kommunikationsverbindung 50 bzw. das Internet 70 Leistungsdaten von der Kommunikationsvorrichtung 22 der Zentraleinheit 20. Bei den Leistungsdaten kann es sich um maximale Leistungssollwerte für die elektrische Vorrichtung 51 in der dezentralen Einheit 10 handeln, welche die dezentrale Einheit 10 über die erste Kommunikationsverbindung 40 von der Zentraleinheit 20 empfängt.

Anschließend erzeugt die Recheneinheit 34 in einem zweiten Verfahrensschritt S320 basierend auf den empfangenen Leistungsdaten dynamische Leistungssollwerte für die elektrische Vorrichtung 51.

In einem dritten Verfahrensschritt S330 sendet die Kommunikationsvorrichtung 31 des Cloud-Servers 30 über die zweite Kommunikationsverbindung 50 bzw. das Internet 70 die erzeugten dynamischen Leistungssollwerte an die Kommunikationsvorrichtung 12 der dezentralen Einheit 10, welche diese an die Steuerungsvorrichtung 15 zum Steuern der elektrischen Vorrichtung 51 weiterleitet.

Das Verfahren S300 kann vor dem Erzeugen der dynamischen Leistungssollwerte in dem Verfahrensschritt S320 einen Verfahrensschritt eines Empfangens einer Lastvorhersage der dezentralen Einheit 10 und/oder einer Vielzahl von dezentralen Einheiten in dem Niederspannungsnetz 60, einer Wettervorhersage, einer Zeitangabe, und/oder Lastprofilen der dezentralen Einheit 10 und/oder einer Vielzahl von dezentralen Einheiten in dem Niederspannungsnetz 60 umfassen. Diese empfangenen Daten können in dem Verfahrensschritt S320 zum Erzeugen der dynamischen Leistungssollwerte verwendet werden.

Ferner kann das Verfahren S300 die Verfahrensschritte Empfangen, von einer Vielzahl von dezentralen Einheiten in dem Niederspannungsnetz 60, von Leistungswerten der Vielzahl von dezentralen Einheiten in dem Niederspannungsnetz 60 und Erzeugen, basierend auf den Leistungswerten, von Leistungssollwerten für die dezentrale Einheit 10 und die Vielzahl von dezentralen Einheiten in dem Niederspannungsnetz 60 umfassen. Entsprechend kann der Cloud-Server 30 die jeweiligen Leistungssollwerte an die Vielzahl von dezentralen Einheiten in dem Niederspannungsnetz 60 senden.

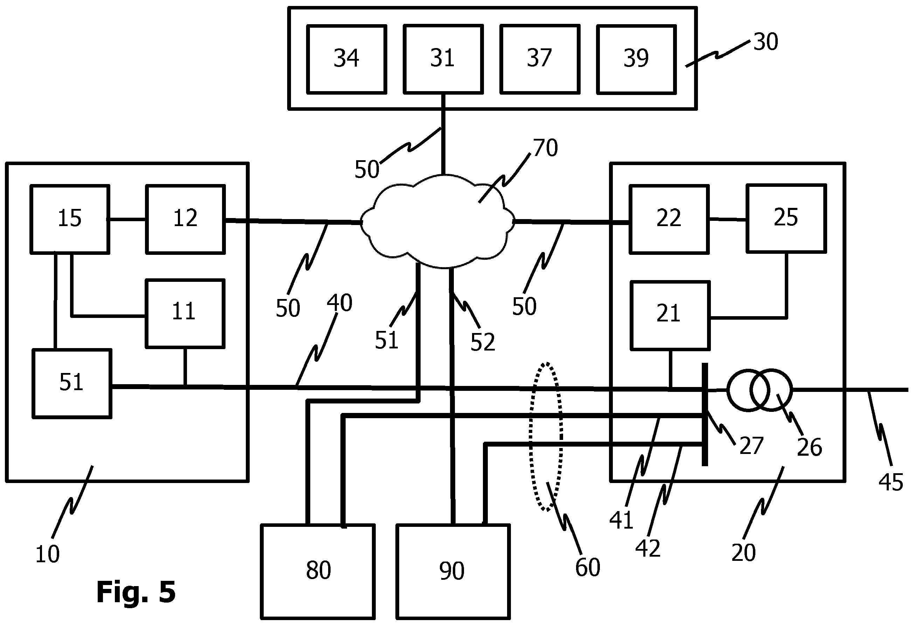

Die Fig. 5 zeigt eine schematische Darstellung eines zweiten Ausführungsbeispiels eines Kommunikationsnetzes für ein elektrisches Versorgungsnetz 60 mit drei dezentralen Einheiten 10, 80, 90, einer Zentraleinheit 20 und einem Server 30.

Das Ausführungsbeispiel der Fig. 5 unterscheidet sich von dem Ausführungsbeispiel der Fig. 1 in dem an den Verteilungsstrang 41 eine dezentrale Einheit 80 und an den Verteilungsstrang 42 eine dezentrale Einheit 90 angeschlossen ist. Weitere, in der Fig. 5 nicht gezeigte, Verteilungsstränge können von dem Verteiler 27 abgehen und Verbindungen zu einer Vielzahl weiterer dezentraler Einheiten herstellen. Insbesondere können ca. 100 Verteilungsstränge von dem Verteiler 27 abgehen und elektrische Verbindungen zu einer entsprechenden Anzahl von dezentralen Einheiten herstellen.

Die dezentralen Einheiten 80 und 90 können wie die dezentrale Einheit 10 aufgebaut sein. Unterschiede können bei der Ausbildung der elektrischen Vorrichtung 51 vorliegen. So kann beispielsweise in der dezentralen Einheit 10 als elektrische Vorrichtung 51 eine Photovoltaikanlage, in der dezentralen Einheit 80 als elektrische Vorrichtung 51 eine Klimaanlage und in der dezentralen Einheit 90 als elektrische Vorrichtung 51 eine Lithium-Ionen-Batterie vorgesehen sein. In der dezentralen Einheit 80 können aber beispielsweise auch eine Photovoltaikanlage und eine Lithium-Ionen-Batterie vorgesehen sein.

Die dezentralen Einheiten 10, 80, 90 empfangen über die Verteilungsstränge 40, 41, 42 jeweilige maximale Leistungssollwerte, d.h. maximale Grenzbedingungen zur Notfallsteuerung der jeweiligen elektrischen Vorrichtungen.

Des Weiteren sind die dezentralen Einheiten 80 und 90 über die Kommunikationsverbindungen 51 und 52 bzw. das Internet 70 und die Kommunikationsverbindung 50 mit dem Cloud-Server 30 verbunden. Wie bei der Kommunikation zwischen Cloud-Server 30 und dezentraler Einheit 10 erfolgt eine IP-basierte Datenkommunikation zwischen Cloud-Server 30 und dezentraler Einheit 80 und zwischen Cloud-Server 30 und dezentraler Einheit 90. Folglich kann der Cloud-Server 30 jeweilige dynamische Leistungssollwerte individuell an jede dezentrale Einheit 10, 80, 90 in dem Niederspannungsnetz 60 senden.

Insbesondere sendet der Cloud-Server 30 den dezentralen Einheiten 10, 80 und 90 derartige Steuerungsinformationen, welche es den jeweiligen Steuerungsvorrichtungen ermöglichen, die elektrischen Vorrichtungen derart zu steuern, dass die Grenzbedingungen der maximalen Leistungssollwerte nicht bzw. nur im Notfall angewendet werden müssen.

Somit kann der Cloud-Server 30 eine Gesamtoptimierung der Steuerung aller elektrischen Vorrichtungen der dezentralen Einheiten 10, 80, 90 in dem Niederspannungsnetz 60 ausführen. Dadurch kann mit einer hohen Wahrscheinlichkeit gewährleistet werden, dass die maximalen Leistungssollwerte als Grenzwerte nicht erreicht werden.

In der folgenden Tabelle wird ein beispielhafter Datenkatalog von Datenwerten der in der Fig. 5 gezeigten Einheiten offenbart.

| Einheit | Datenwerte |
|---|---|
| Zentraleinheit 20 | Aktive Leistung (gegenwärtiger Wert) |
| | Aktive Leistung (Maximum, konstant) |
| | |
| Dezentrale Einheiten 10, 80, 90 | Aktive Leistung, lokale Erzeugung |
| | |
| Cloud-Server 30 | Gesetzter Wert für dezentrale Einheit, direkt |
| | Lebendsignal für Zentraleinheit |
| | Gesetzter Wert für Zentraleinheit |

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Verfahren (S100) zum Steuern einer dezentralen Einheit (10) in einem elektrischen Versorgungsnetz (60), umfassend die folgenden durch die dezentrale Einheit (10) ausgeführten Verfahrensschritte:
Empfangen (S110), von einer Zentraleinheit (20) in dem elektrischen Versorgungsnetz (60) über eine erste Kommunikationsverbindung (40), einer ersten Steuerungsinformation für die dezentrale Einheit (10);
Empfangen (S120), von einem Server (30) über eine zweite Kommunikationsverbindung (50), einer zweiten Steuerungsinformation für die dezentrale Einheit (10); und
Steuern (S130) der dezentralen Einheit (10) in Abhängigkeit von der ersten und/oder der zweiten Steuerungsinformation, wobei
die erste Kommunikationsverbindung (40) und die zweite Kommunikationsverbindung (50) verschiedene Kommunikationsverbindungen sind.

2. Verfahren nach Anspruch 1, wobei
die erste Kommunikationsverbindung (40) eine direkte, unidirektionale und/oder eine Powerline Communication-, PLC, Kommunikationsverbindung zwischen der Zentraleinheit (20) und der dezentralen Einheit (10) ist; und/oder,
wobei die erste Steuerungsinformation einen maximalen Leistungssollwert der dezentralen Einheit (10) umfasst.

3. Verfahren nach einem der vorhergehenden Ansprüche, wobei
die zweite Kommunikationsverbindung (50) eine Internet-Protokoll-, IP, basierte Kommunikationsverbindung ist und/oder sich der Server (30) in einer Rechnerwolke befindet.

4. Verfahren nach einem der vorhergehenden Ansprüche, wobei
die zweite Steuerungsinformation Steuerungsdaten zum Verringern einer Leistungsaufnahme der dezentralen Einheit (10) aus dem elektrischen Versorgungsnetz (60), Steuerungsdaten zum Verringern einer Leistungsabgabe der dezentralen Einheit (10) in das elektrischen Versorgungsnetz (60), Steuerungsdaten zum Erhöhen einer Leistungsaufnahme der dezentralen Einheit (10) aus dem elektrischen Versorgungsnetz (60), Steuerungsdaten zum Erhöhen einer Leistungsabgabe der dezentralen Einheit (10) in das elektrischen Versorgungsnetz (60), Steuerungsdaten zum Unterbrechen einer Leistungsaufnahme der dezentralen Einheit (10) aus dem elektrischen Versorgungsnetz (60) und/oder Steuerungsdaten zum Unterbrechen einer Leistungsabgabe der dezentralen Einheit (10) in das elektrischen Versorgungsnetz (60) umfasst.

5. Dezentrale Einheit (10) in einem elektrischen Versorgungsnetz (60), umfassend
erste Empfangsmittel (11), die dazu eingerichtet sind, von einer Zentraleinheit (20) in dem elektrischen Versorgungsnetz (60) über eine erste Kommunikationsverbindung (40) eine erste Steuerungsinformation für die dezentrale Einheit (10) zu empfangen;
zweite Empfangsmittel (12), die dazu eingerichtet sind, von einem Server (30) über eine zweite Kommunikationsverbindung (50), eine zweite Steuerungsinformation für die dezentrale Einheit (10) zu empfangen; und
Steuerungsmittel (15), die dazu eingerichtet sind, die dezentrale Einheit (10) in Abhängigkeit von der ersten und/oder der zweiten Steuerungsinformation zu steuern, wobei
die erste Kommunikationsverbindung (40) und die zweite Kommunikationsverbindung (50) verschiedene Kommunikationsverbindungen sind.

6. Verfahren (S200) zum Steuern einer dezentralen Einheit (10) in einem elektrischen Versorgungsnetz (60), umfassend die folgenden durch eine Zentraleinheit (20) in dem elektrischen Versorgungsnetz (60) ausgeführten Verfahrensschritte:
Senden (S210), an die dezentrale Einheit (10) über eine erste Kommunikationsverbindung (40), einer ersten Steuerungsinformation für die dezentrale Einheit (10); und
Senden (S220), an einen mit der dezentralen Einheit (10) über eine zweite Kommunikationsverbindung (50) in Kommunikationsverbindung stehenden Server (30) über die zweite Kommunikationsverbindung (50), von Leistungsdaten, wobei
die erste Kommunikationsverbindung (40) und die zweite Kommunikationsverbindung (50) verschiedene Kommunikationsverbindungen sind.

7. Verfahren nach Anspruch 6, ferner umfassend
Senden (S230), an den Server (30) über die zweite Kommunikationsverbindung (50), von Leistungsdaten, die mit der dezentralen Einheit (10) und/oder einer Vielzahl von dezentralen Einheiten (80, 90) in dem elektrischen Versorgungsnetz (60) in Zusammenhang stehen.

8. Zentraleinheit (20) in einem elektrischen Versorgungsnetz (60), umfassend erste Sendemittel (21), die dazu eingerichtet sind, an eine dezentrale Einheit (10) in dem elektrischen Versorgungsnetz (60) über eine erste Kommunikationsverbindung (40) eine erste Steuerungsinformation für die dezentrale Einheit (10) zu senden; und
zweite Sendemittel (22), die dazu eingerichtet sind, an einen mit der dezentralen Einheit (10) über eine zweite Kommunikationsverbindung (50) in Kommunikationsverbindung stehenden Server (30) über die zweite Kommunikationsverbindung (50) Leistungsdaten zu senden, wobei
die erste Kommunikationsverbindung (40) und die zweite Kommunikationsverbindung (50) verschiedene Kommunikationsverbindungen sind.

9. Verfahren (S300) zum Steuern einer dezentralen Einheit (10) in einem elektrischen Versorgungsnetz (60), umfassend die folgenden durch einen Server (30) ausgeführten Verfahrensschritte:
Empfangen (S310), von einer Zentraleinheit (20) in dem elektrischen Versorgungsnetz (60), von Leistungsdaten;
Erzeugen (S320), basierend auf den Leistungsdaten, von zweiter Steuerungsinformation für die dezentrale Einheit (10); und
Senden (S330), an die dezentrale Einheit (10), der zweiten Steuerungsinformation für die dezentrale Einheit (10).

10. Verfahren nach Anspruch 9, ferner umfassend
Empfangen, von einer Vielzahl von dezentralen Einheiten (80, 90) in dem elektrischen Versorgungsnetz (60), von Leistungsdaten der Vielzahl von dezentralen Einheiten (80, 90); und
Erzeugen, basierend auf den Leistungsdaten der Vielzahl von dezentralen Einheiten (80, 90), der zweiten Steuerungsinformation für die dezentrale Einheit (10).

11. Verfahren nach Anspruch 9 oder 10, ferner umfassend
Senden von Steuerungsinformation an eine Vielzahl von dezentralen Einheiten (80, 90) in dem elektrischen Versorgungsnetz (60).

12. Verfahren nach einem der Ansprüche 9 bis 11, wobei das Erzeugen der zweiten Steuerungsinformation ferner auf einer Lastvorhersage der dezentralen Einheit (10) und/oder einer Vielzahl von dezentralen Einheiten (80, 90) in dem elektrischen Versorgungsnetz (60), einer Wettervorhersage, einer Zeitangabe, und/oder Lastprofilen der dezentralen Einheit (10) und/oder einer Vielzahl von dezentralen Einheiten (80, 90) in dem elektrischen Versorgungsnetz (60) basiert.

13. Server (30) zum Steuern einer dezentralen Einheit (10) in einem elektrischen Versorgungsnetz (60), umfassend:
Server-Kommunikationsmittel (31), die dazu eingerichtet sind, von einer Zentraleinheit (20) in dem elektrischen Versorgungsnetz (60) Leistungsdaten zu empfangen; und
Erzeugungsmittel (34), die dazu eingerichtet sind, basierend auf den Leistungsdaten zweite Steuerungsinformation für die dezentrale Einheit (10) zu erzeugen, wobei
die Server-Kommunikationsmittel (31) ferner dazu eingerichtet sind, die zweite Steuerungsinformation für die dezentrale Einheit (10) an die dezentrale Einheit (10) zu senden.

14. Verfahren zum Steuern einer dezentralen Einheit (10) in einem elektrischen Versorgungsnetz (60), umfassend:
die durch die dezentrale Einheit (10) ausgeführten Verfahrensschritte gemäß einem oder mehreren der Ansprüche 1 bis 4;
die durch die Zentraleinheit (20) ausgeführten Verfahrensschritte gemäß einem oder mehreren der Ansprüche 6 bis 7; und
die durch den Server (30) ausgeführten Verfahrensschritte gemäß einem oder mehreren der Ansprüche 9 bis 12.

15. Kommunikationsnetz (40, 50), umfassend
eine erste Kommunikationsverbindung (40), welche eine Zentraleinheit (20) in einem elektrischen Versorgungsnetz (60) und eine dezentrale Einheit (10) in dem elektrischen Versorgungsnetz (60) verbindet; und
eine zweite Kommunikationsverbindung (50), welche die Zentraleinheit (20) und die dezentrale Einheit (10) über einen Server (30) verbindet, wobei
die erste Kommunikationsverbindung (40) und die zweite Kommunikationsverbindung (50) verschiedene Kommunikationsverbindungen sind.
